(19) **Europäisches Patentamt**
**European Patent Office**
**Office européen des brevets**

(11) Publication number: **0 510 690 A2**

# EUROPEAN PATENT APPLICATION

(21) Application number: **92107058.7**

(22) Date of filing: **24.04.92**

(51) Int. Cl.⁵: **G11B 5/147**, G11B 5/10

(30) Priority: **25.04.91 JP 121839/91**

(43) Date of publication of application:
**28.10.92 Bulletin 92/44**

(84) Designated Contracting States:
**DE FR NL**

(71) Applicant: **NEC CORPORATION**
**7-1, Shiba 5-chome Minato-ku**
**Tokyo 108-01(JP)**

(72) Inventor: **Ishiwata, Nobuyuki**
**c/o NEC Corporation, 7-1, Shiba 5-chome**
**Minato-ku, Tokyo(JP)**

(74) Representative: **Glawe, Delfs, Moll & Partner**
**Patentanwälte**
**Postfach 26 01 62 Liebherrstrasse 20**
**W-8000 München 26(DE)**

(54) **Magnetic head.**

(57) A magnetic head includes a pair of substrates made of ceramic which contains CaO, $TiO_2$ and NiO as the main components, and a soft magnetic layer made of alloy made of FeSiAl which contains 10.0 to 10.6 weight % Si, 5.0 to 7.0 weight % Al and the rest of Fe so that the magnetic layer has magnetostriction of $-1 \times 10^{-6}$ to $0.5 \times 10^{-6}$ λs to provide the maximum output level.

*FIG.2*

EP 0 510 690 A2

Rank Xerox (UK) Business Services

## FIELD OF THE INVENTION

This invention relates to a magnetic head, and more particularly to, a magnetic head for high frequency recording.

## BACKGROUND OF THE INVENTION

Recently, a magnetic head core having a high saturation magnetic flux density is required to accommodate to a record medium having a high coercive force. Accordingly, a magnetic head using a magnetic core made of metal soft magnetic material having a high saturation magnetic flux density, for example, Sendust and amorphous films has been developed.

In Japanese Patent Publication No. " HEISEI 2-48965", a conventional laminated head, whose magnetic core is sandwiched between non-magnetic substrates made of sintered ceramics including MnO and NiO, has been proposed. In the magnetic head, a thermal expansion coefficient of the ceramics are close to that of a magnetic core made of Sendust film.

Further, a conventional laminated magnetic head using substrates made of ceramics including CaO, $TiO_2$ and NiO having high abrasion resistance has been proposed in Japanese Patent Application No. "HEISEI 2-264320" so that the life of the magnetic head is expanded.

According to the conventional laminated magnetic head, however, there is a disadvantage in that the magnetic head is difficult to operate with high efficiency at any time, because magnetostriction of the magnetic core is not considered. That is, it is not known that the magnetostriction is an important parameter in designing a magnetic head, so that is fluctuates time to time.

## SUMMARY OF THE INVENTION

Accordingly, it is an object of the invention to provide a magnetic head operates with high efficiency.

According to the invention, a magnetic head, including:

a pair of substrates made of ceramic which contains CaO, $TiO_2$ and NiO as the main components; and

a magnetic core made of alloy having magnetostriction of $-1 \times 10^{-6}$ to $0.5 \times 10^{-6}$ λs, the magnetic core being supported between the pair of substrates.

## BRIEF DESCRIPTION OF THE DRAWINGS

The invention will be explained in more detail in conjunction with appended drawings; wherein:

Fig. 1 is a perspective view showing a conventional laminated magnetic head;

Fig. 2 is a cross-sectional view showing a magnetic head of a first preferred embodiment according to the invention.

Fig. 3 is a graph showing relation between output and magnetostriction in the magnetic head of the first preferred embodiment according to the invention;

Figs. 4 and 5 are graphs showing relation between magnetostriction and Si content, respectively; and

Fig. 6 is a graph showing relation between output and magnetostriction in the magnetic head of a second preferred embodiment according to the invention.

## DESCRIPTION OF THE PREFERRED EMBODIMENTS

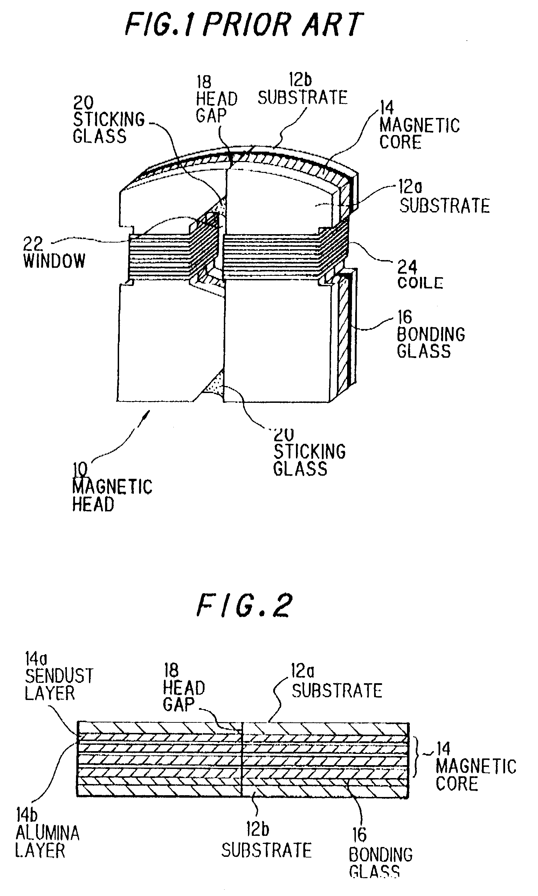

Before describing a magnetic head according to the invention, the briefly aforementioned conventional magnetic head will be explained in conjunction with Fig. 1.

The conventional magnetic head 10 includes two substrates 12a and 12b, a magnetic core 14 made of Sendust (FeSiAl alloy) or alloy including Cr, Ru, Ti, etc. and a bonding glass layer 16 for bonding the substrate 12b and the magnetic core 14. The magnetic head 10 has a top shaped to be curved and provided with a head gap 18 in the center. In fabrication, two of half magnetic structures are stuck to have a window 22 by a sticking glass 20, and a coil 24 is wound around the magnetic head 10 through the window 22.

According to the conventional magnetic head, however, there is a disadvantage in that the magnetic head is difficult to operate with high efficiency for the reason set out before.

Next, a magnetic head of a first preferred embodiment will be explained in conjunction with Figs. 2 to 4. The magnetic head of the first preferred embodiment includes two substrates 12a and 12b made of ceramic which contains CaO, $TiO_2$ and NiO as the main components, a soft magnetic layer 14 made of Sendust (FeSiAl alloy) and a bonding glass layer 16 positioned between the substrate 12b and the magnetic core 14. The magnetic head 10 has a top shaped to be curved and provided with a head gap 18 in the center.

The magnetic core 14 includes four Sendust layers 14a each having a thickness of 5 μm and alumina layers 14b each having a thickness of 0.1 μm.

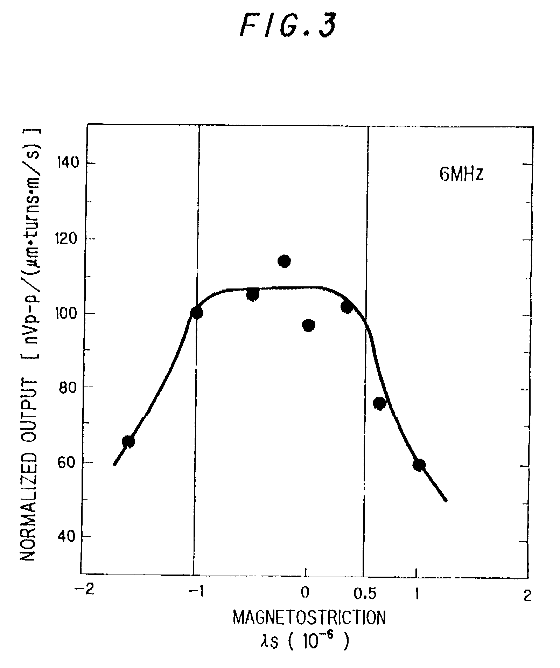

The soft magnetic layer 14 contains 10.0 to 10.6 weight % Si, 5.0 to 7.0 weight % Al and the rest of Fe. The composition of the soft magnetic layer 14 is determined in accordance with magnetostriction, based on the founding that the magnetic head 10 efficiently operates when the soft magnetic layer 14 has magnetostriction of $-1 \times 10^{-6}$ to $0.5 \times 10^{-6}$ $\lambda$s as shown in Fig. 3. That will be explained in more detail later.

In fabrication, the magnetic core 14 is formed on the substrate 12a by sputtering, and the substrate 12b is bonded on the magnetic core 14 by the bonding glass layer 16. In fabrication of the magnetic core 14, four Sendust layers 14a each having a thickness of 5 $\mu$m are layered alternately with alumina layers 14b each having a thickness of 0.1 $\mu$m. After that, in the same manner as the conventional one, two of half magnetic structures are stuck to have a window 22 by a sticking glass 20, and a coil 24 is wound around the magnetic head 10 through the window 22.

Fig. 3 shows a relation between magnetostriction and output. According to the graph, it can be found that output level is especially high in a range of magnetostriction between $-1 \times 10^{-6}$ to $0.5 \times 10^{-6}$ $\lambda$s. In this experiment, the output level is a normalized output measured by peak to peak voltage of nano-volts (n $V_{p-p}$). The normalized output is obtained in the division of a voltage across output terminals of the coil 24 by a width ($\mu$m) of the magnetic head 10, turns of the coil 24, and a relative speed (m/s) between a recording medium and a head.

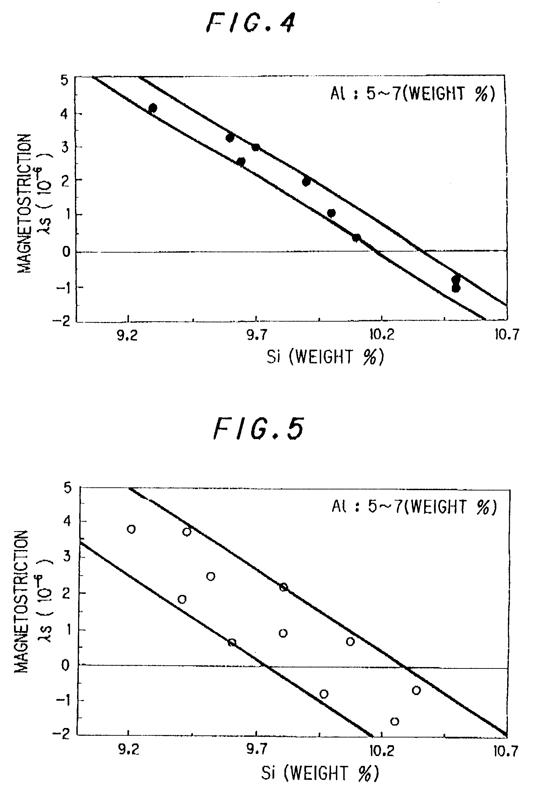

Fig. 4 shows dependence of magnetostriction in a direction of the thickness in relation to Si content, on condition that FeSiAl alloy is formed on a ceramic substrate or a glass substrate by sputtering. According to the graph, it can be found that magnetostriction changes approximately linear positive to negative in accordance with the increase of Si content. Then, Si is determined in a range of 10.0 to 10.6 weight % in order that magnetostriction of the magnetic head is in a range of $-1 \times 10^{-6}$ to $0.5 \times 10^{-6}$ $\lambda$s. In this experiment, a composition of Al is 5.0 to 7.0 weight % in order to avoid deterioration of magnetostriction.

Fig. 5 shows dependence of magnetostriction in relation to Si content, on condition that FeSiAlM ("M" is an element including at least one of Cr, Ru and Ti) is formed on a ceramic substrate or a glass substrate by sputtering. According to the graph, it can be found that magnetostriction changes approximately linear positive to negative in accordance with the increase of Si content.

In this case, FeSiAlM contains 9.6 weight % to 10.5 weight % Si, 5.0 weight % to 7.0 weight % Al, 0.1 weight % to 2.0 weight % "M" and the rest of Fe. Because, if the component "M" is included less than 1.0 weight %, there is no effect to increase corrosion resistance and abrasion resistance, while if the component "M" is included more than 2.0 weight %, magnetic property of the magnetic head is deteriorated.

As described above, according to the first preferred embodiment, the magnetic head has high durability and high efficiency, so that a magnetic tape having high coercive force (for example, a VTR tape for so called "high-diffusion") can be slid with thereon high speed (for example, 21m/min).

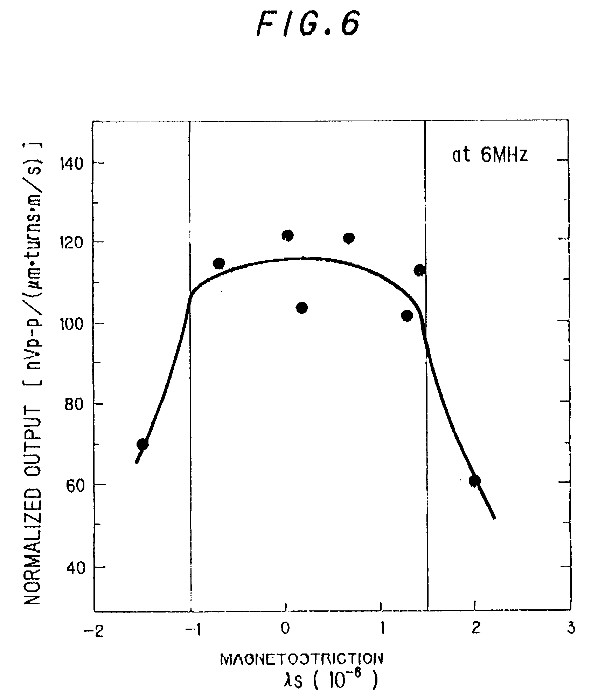

Next, a magnetic head of a second preferred embodiment according to the invention will be explained in conjunction with Fig. 6. A magnetic head of the second preferred embodiment includes two substrates 12a and 12b made of ceramic which contains MnO and NiO as the main components, a soft magnetic layer 14 made of Sendust (FeSiAl alloy) and a bonding glass layer 16 positioned between the substrate 12b and the magnetic core 14, with reference to Figs. 1 and 2.

In the second preferred embodiment, the soft magnetic layer 14 contains 9.8 to 10.6 weight % Si, 5.0 to 7.0 weight % Al and the rest of Fe. The composition of the soft magnetic layer 14 is determined in accordance with magnetostriction, because the magnetic head 10 efficiently operates when the soft magnetic layer 14 has magnetostriction of $-1 \times 10^{-6}$ to $1.5 \times 10^{-6}$ $\lambda$s as shown in Fig. 6.

Otherwise, when a soft magnetic layer made of FeSiAlM ("M" is an element including at least one of Cr, Ru and Ti) is used, the soft magnetic layer 14 contains 9.4 to 10.5 weight % Si, 5.0 to 7.0 weight % Al, 0.1 weight % to 2.0 weight % component "M" and the rest of Fe. The composition of the soft magnetic layer 14 is determined in accordance with magnetostriction shown in Fig. 5.

As described above, according to the second preferred embodiment, the same effect as the first preferred embodiment can be obtained.

Although the invention has been described with respect to specific embodiment for complete and clear disclosure, the appended claims are not to be thus limited but are to be construed as embodying all modification and alternative constructions that may occur to one skilled in the art which fairly fall within the basic teaching herein set forth.

**Claims**

1. A magnetic head, comprising:
   a pair of substrates made of ceramic which contains CaO, $TiO_2$ and NiO as the main components; and
   a magnetic core made of alloy having magnetostriction of $-1 \times 10^{-6}$ to $0.5 \times 10^{-6}$ $\lambda$s, said magnetic core being supported between said pair of substrates.

2. A magnetic head, according to claim 1, wherein:

said magnetic core is made of FeSiAl which contains 10.0 to 10.6 weight % Si, 5.0 to 7.0 weight % Al and the rest of Fe.

3. A magnetic head, according to claim 1, wherein:

said magnetic core is made of FeSiAlM ("M" is an element including at least one of Cr, Ru and Ti) which contains 9.6 to 10.5 weight % Si, 5.0 to 7.0 weight % Al, 0.1 to 2.0 weight % said component "M" and the rest of Fe.

4. A magnetic head, comprising:

a pair of substrates made of ceramic including MnO and NiO as the main components; and

a magnetic core made of alloy having magnetostriction of $-1 \times 10^{-6}$ to $1.5 \times 10^{-6}$ λs, said magnetic core being supported between said pair of substrates.

5. A magnetic head, according to claim 4, wherein:

said magnetic core is made of FeSiAl which contains 9.8 to 10.6 weight % Si, 5.0 to 7.0 weight % Al and the rest of Fe.

6. A magnetic head, according to claim 4, wherein:

said magnetic core is made of FeSiAlM ("M" is an element including at least one of Cr, Ru and Ti) which contains 9.4 to 10.5 weight % Si, 5.0 to 7.0 weight % Al, 0.1 to 2.0 weight % said component "M" and the rest of Fe.

# FIG.1 PRIOR ART

20
STICKING
GLASS

18
HEAD
GAP

12b
SUBSTRATE

14
MAGNETIC
CORE

12a
SUBSTRATE

22
WINDOW

24
COILE

16
BONDING
GLASS

20
STICKING
GLASS

10
MAGNETIC
HEAD

# FIG.2

14a
SENDUST
LAYER

18
HEAD
GAP

12a
SUBSTRATE

14
MAGNETIC
CORE

14b
ALUMINA
LAYER

12b
SUBSTRATE

16
BONDING
GLASS

5

# FIG.3

## FIG.4

## FIG.5

# F/G.6